# EUROPÄISCHE PATENTSCHRIFT

(11) **EP 0 932 793 B1**
(45) Veröffentlichungstag und Bekanntmachung des Hinweises auf die Patenterteilung: **05.12.2001**
(21) Anmeldenummer: 97918879.4
(22) Anmeldetag: 02.10.1997
(51) Int. Cl.: F16L 55/07, F16L 39/00

(54) **VON ABGAS DURCHSTRÖMTES ROHRSTÜCK EINES ABGASFÜHRENDEN ROHRLEITUNGSSYSTEMS, SOWIE DIESES ROHRLEITUNGSSYSTEM**
PIECE OF PIPING THROUGH WHICH WASTE GAS FLOWS OF A SYSTEM OF PIPES CARRYING WASTE GASES, AND THIS SYSTEM OF PIPES
TUYAU TRAVERSE PAR UN EFFLUENT GAZEUX FAISANT PARTIE D'UN SYSTEME DE TUYAUX D'EVACUATION DE GAZ, ET LEDIT SYSTEME DE TUYAUX

(30) Priorität: 24.10.1996 CH 261096; 28.05.1997 CH 126397
(43) Veröffentlichungstag der Anmeldung: 04.08.1999
(73) Patentinhaber: Ila AG Ingenieurgesellschaft für Lufttechnische Anlagen, 8645 Jona (CH)
(72) Erfinder: SCHMIDT, Reinhold, CH-8735 St. Gallenkappel (CH)
(74) Vertreter: Köver, François
(86) Internationale Anmeldenummer: CH9700370
(87) Internationale Veröffentlichungsnummer: WO9817938

(56) Entgegenhaltungen:
- GB-A- 2 073 045
- US-A- 3 340 819
- US-A- 3 506 039
- US-A- 4 003 408
- US-A- 4 017 102

## Beschreibung

Die Erfindung betrifft ein von Abgas durchströmtes Rohrstück eines abgasführenden Rohrleitungssystems, wobei eine Innenwand des Rohrstückes zwecks ihrer Reinigung mit einer Flüssigkeit benetzbar ist, sowie ein abgasführendes Rohrleitungssystem mit mindestens einem solchen Rohrstück.

Bei der Verarbeitung von Werkstoffen im Temperaturbereich oberhalb der Raumtemperatur gelangen durch Sublimation, Verdunstung oder Verdampfung luftfremde Stoffe in die Umgebungsluft. Dies ist beispielsweise in Produktionsanlagen der Fall, in denen Produkte durch aufeinanderfolgendes Zusammenfügen mehrerer Werkstoffe in verschiedenen Abschnitten einer Produktionsanlage hergestellt werden. Bei Temperaturabfall kondensieren diese luftfremden Stoffe zunächst als Aerosole und Ablagerungen von Feststoffen an sich bietenden Flächen von Anlageteilen. Im Laufe der Zeit agglomerieren sich diese Ablagerungen unter Bildung von Anhäufungen, die ggf. bis zur Flächendeckung wachsen und zudem aushärten und sich an die Flächen der Anlageteile binden können.

Davon betroffen sind Abschnitte einer Produktionsanlage, die den Verarbeitungsabschnitten dieser Produktionsanlage unmittelbar zugeordnet oder direkt nachgeschaltet sind. Es kann sich beispielsweise um Lüftungsanlagen handeln, welche die Abluft bzw. das Abgas aus den Räumen der Produktionsanlage abführen und bei denen sich die Ablagerungen an Rohrwänden im Rohrleitungssystem binden, was in der Produktion zu Störungen, Unterbrechungen und Gefahren führt.

Als Beispiel soll hier die Situation in der industriellen Spanplattenproduktion erwähnt werden, bei welcher die erwähnten Vorgänge in typischer Form ablaufen und sich wiederholen. Spanplatten werden aus Spanmaterial hergestellt, beispielsweise aus Holzspänen oder anderen verholzten Fasermaterialien. Während das beleimte Spanmaterial unter hohem Pressdruck und bei hohen Temperaturen zu Spanplatten verarbeitet wird, setzt es Dämpfe frei, die unter anderem Harze, Phenole, Paraffine und Formaldehyd enthalten. In die Umgebungsluft gelangen auch Öl- und Fettdämpfe, die im Bereich des mechanischen Antriebs der Produktionsanlage entstehen. Die mit solchen luftfremden Stoffen stark beladene Umgebungsluft wird über Rohrleitungssysteme abgesaugt. Dabei kühlt sich diese abgesaugte Umgebungsluft auch ab, was wie erwähnt die Kondensation der luftfremden Stoffe zu Aerosolen bewirkt, die sich dann als Ablagerungen von Feststoffen insbesondere an den Rohrwänden im Rohrleitungssystem niederschlagen. Solche Ablagerungen führten schon zu schweren Brandfällen.

Es besteht daher ein Bedarf an Vorrichtungen, mit deren Hilfe Ablagerungen von Feststoffen an die Rohrwände im Rohrleitungssystem beispielsweise von Lüftungsanlagen verhindert werden können.

In diesem Zusammenhang sind Einrichtungen bekannt, die mit umfangreichen im Rohrleitungssystem integrierten Sprühsystemen versuchen, die Rohrwände von Ablagerungen freizuhalten. Bei solchen Sprühsystemen wird Wasser an bestimmten Stellen eines Rohrleitungssystems durch Düsen in das Rohrinnere gespritzt. Im Rohrinnern entsteht dadurch ein Wasservorhang, durch welchen das von der Lüftungsanlage geförderte Abgas hindurchströmt. Ein derartiges Sprühsystem ist vor allem mit dem Nachteil behaftet, dass sein Einbau mit erheblichem Aufwand verbunden ist. Des weiteren sind für seinen Betrieb grosse Wassermengen erforderlich, und dieses Wasser muss dann mit grossem Aufwand in Kläranlagen gereinigt werden.

In US-A-3506039 wird das Lüften eines Rohrstückes offenbart. Das Rohrstück besteht aus einem Aussenrohr aus Material, das für Flüssigkeit undurchlässig ist, und einer Auskleidung ("lining"), die teilweise für Gas und Dampf durchlässig ist. Ein Abzug und mehrere Kanäle sind zwischen dieser Auskleidung und dem Aussenrohr vorgesehen, um das Gas bzw. den Dampf nach aussen zu leiten.

Aufgabe der vorliegenden Erfindung ist es, ein von Abgas durchströmtes Rohrstück eines abgasführenden Rohrleitungssystems der eingangs genannte Art sowie ein abgasführendes Rohrleitungssystem mit mindestens einem solchen Rohrstück vorzuschlagen, bei welchem die Rohrwände im Rohrleitungssystem unter Verwendung möglichst kleiner Flüssigkeitsmengen von Feststoffablagerungen freigehalten werden können.

Diese Aufgabe wird erfindungsgemäss mit einem Rohrstück gemäss der im Patentanspruch 1 definierten Merkmalskombination gelöst. Ein erfindungsgemäss ausgebildetes abgasführendes Rohrleitungssystem ist im Patentanspruch 5 definiert. Vorteilhafte Ausbildungen der Erfindung sind in den abhängigen Ansprüchen definiert.

Die Erfindung ermöglicht die stufenlos regulierbare Benetzung der dem Abgas ausgesetzten Innenwand des Rohrstückes eines abgasführenden Rohrleitungssystems zwecks ihrer Reinigung und verhindert somit das Entstehen von Ablagerungen und Anbackungen im Rohrleitungssystem.

Das erfindungsgemässe Rohrstück weist ein Aussenrohr und ein darin angeordnetes Innenrohr auf. Das Aussenrohr besteht aus einem flüssigkeitsundurchlässigen, stabilen Material wie beispielsweise Chromstahl, verzinktem Eisen usw. Das von Abgas durchströmte Innenrohr ist aus einem kontrolliert flüssigkeitsdurchlässigen Material, vorzugsweise aus einem porösen Material gefertigt, das vorzugsweise ein gesintertes Material ist und aus Kunststoff, Metall oder Keramik bestehen sowie unterschiedliche Porositäten aufweisen kann. Zwischen dem Aussenrohr und dem Innenrohr ist ein Rohrzwischenraum definiert, der mit der Flüssigkeit gefüllt ist. Bei Druckgleichheit zwischen dem Innenraum des Innenrohres und dem Rohrzwischenraum verhält sich das kontrolliert flüssigkeitsdurchlässige Material als flüssigkeitsundurchlässig. Bei Überdruck in der Flüssigkeit oder bei abgasseitigen Unterdruck dringt hingegen die Flüssigkeit, von der Druckdifferenz kontrolliert, durch das dreidimensionale Porensystem des als Diaphragma wirkenden Innenrohres, woraus sich ergibt, dass die Flüssigkeit die dem Abgas ausgesetzte Innenfläche des Innenrohres gleichmässig benetzt. Bei noch höherem Überdruck beginnt die Flüssigkeit durch das Innenrohr zu rieseln. Die Flüssigkeitsmenge, die zur Aufnahme der luftfremden Stoffe aus dem Abgas benötigt wird, kann somit in Abhängigkeit von der gewählten Porosität des Innenrohres druckgesteuert über die gesamte dem Abgas ausgesetzte Innenfläche des Innenrohres beliebig vergrössert und reduziert werden. Der Überdruck in der Flüssigkeit kann beispielsweise durch eine Pumpe im Kreislauf der Flüssigkeit, der abgasseitige Unterdruck beispielsweise durch einen an der Ansaugseite des Rohrleitungssystems angeordneten Ventilator erzeugt werden. Gegenüber dem Überdruckbetrieb hat der Unterdruckbetrieb den Vorteil, dass keine Pumpe benötigt wird.

Die dem Abgas ausgesetzte Innenfläche des Innenrohres kann dauernd oder in Intervallen benetzt werden, die Zeitdauer ihrer Reinigung kann also gesteuert und dem jeweiligen Bedarf angepasst werden.

Nachstehend wird die Erfindung anhand von Ausführungsbeispielen unter Bezugnahme auf die Zeichnung erläutert, wobei alle in den Figuren durch gleiche Funktion einander entsprechende Teile mit gleichen Bezugszeichen bezeichnet werden. Es zeigen:
- Fig. 1a: einen Längsschnitt durch ein erfindungsgemässes Rohrstück;
- Fig. 1b: einen Querschnitt durch das Rohrstück der Fig. 1a entlang der Schnittlinie A-A;
- Fig. 2: eine perspektivische Darstellung eines erfindungsgemässen Rohrstückes;
- Fig. 3a: eine schematische Darstellung eines in eine Entlüftungsanlage integrierten erfindungsgemässen Rohrleitungssystems, dem ein Zyklonabscheider und eine Sedimentationswanne nachgeschaltet sind;
- Fig. 3b: eine schematische Darstellung eines in eine Entlüftungsanlage integrierten erfindungsgemässen Rohrleitungssystems, dem ein Tropfenabscheider und eine Sedimentationswanne nachgeschaltet sind; und
- Fig. 4: einen Längsschnitt durch eine Tropfenausschleusvorrichtung in einem erfindungsgemässen Rohrleitungssystem.

Beim dargestellten Ausführungsbeispiel eines erfindungsgemässen Rohrstückes 1 umfasst dieses ein Innenrohr 2 und ein koaxial dazu angeordnetes Aussenrohr 3. Das Innenrohr 2 ist mit Hilfe von zwei ringförmigen Abschlussplatten 4 am Aussenrohr 3 befestigt. Koaxial zum Aussenrohr 3 ist an dessen Stirnseiten jeweils eine Abschlussplatte 4 angeordnet, deren Aussendurchmesser etwas grösser ist als der Aussendurchmesser des Aussenrohres 3. Der Randbereich jeder Abschlussplatte 4 ragt also an der Aussenseite des Aussenrohres 3 hervor. An beiden Enden des Aussenrohres 3 wird dadurch ein umlaufender Flansch gebildet. Dieser Flansch dient zur Verbindung der Rohrstücke 1 miteinander oder mit anderen Teilen des Rohrleitungssystems, wie einem Zuführrohr bzw. Abführrohr, einer Tropfenausschleusvorrichtung usw. Zu diesem Zweck sind die Flansche mit in regelmässigen Winkelabständen angeordneten durchgehenden Bohrungen 5 versehen. Beispielsweise werden zwei Rohrstücke 1 aneinander befestigt, indem der Flansch des einen Rohrstückes 1 am Flansch des anderen Rohrstückes 1 angeschraubt wird. Die dafür verwendeten Schrauben 6 werden einfach in die Bohrungen 5 eingefügt. Der Innendurchmesser der ringförmigen Abschlussplatten 4 entspricht dem Aussendurchmesser des Innenrohres 2. Das Innenrohr 2 ist um die doppelte Dicke einer Abschlussplatte 4 länger als das Aussenrohr 3, so dass seine Endbereiche jeweils in das zentrale Loch 7 der Abschlussplatten 4 hineinragen. Die beiden Stirnseiten des Innenrohres 2 sind mit der Aussenseite je einer Abschlussplatte 4 bündig.

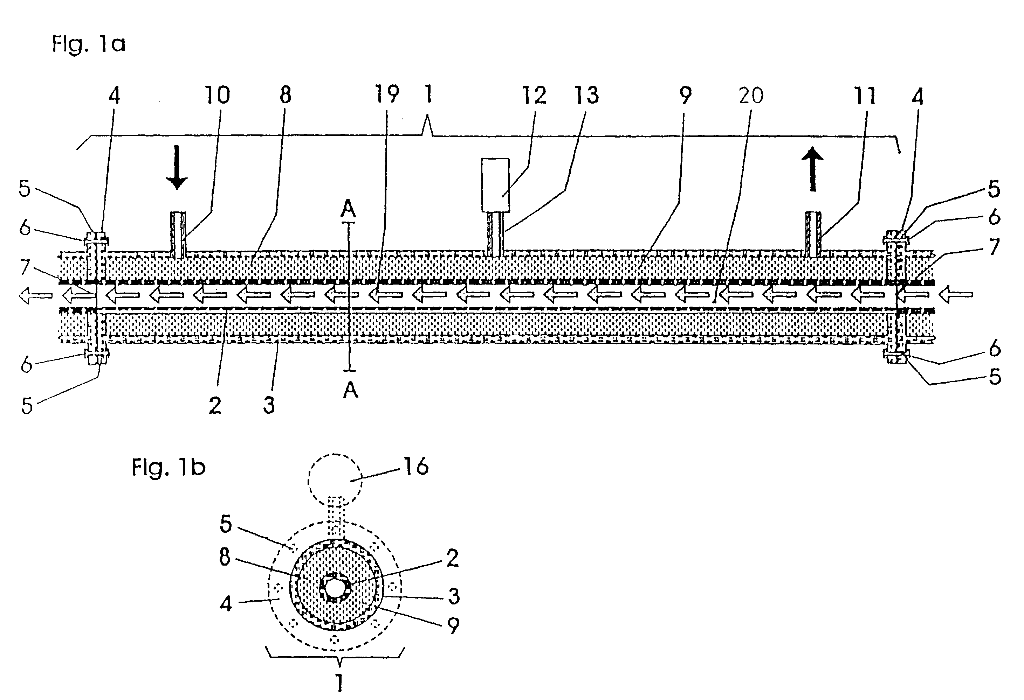

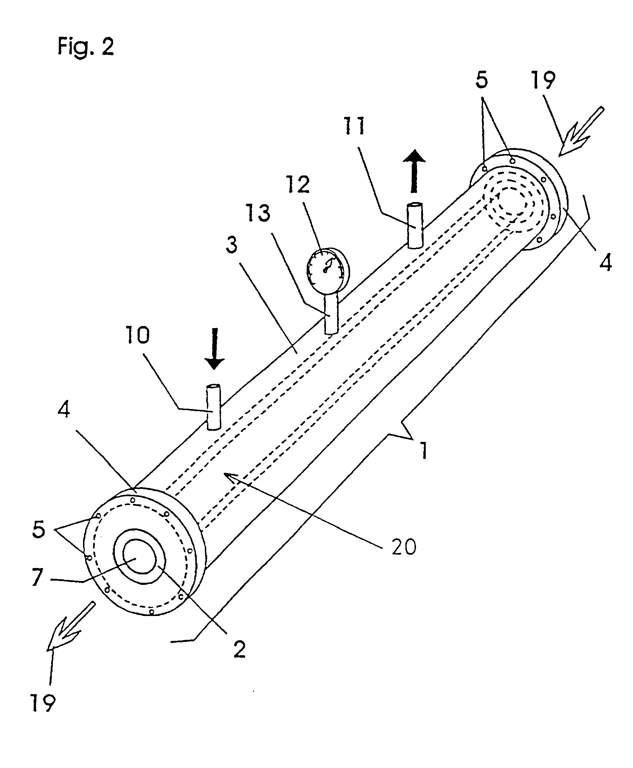

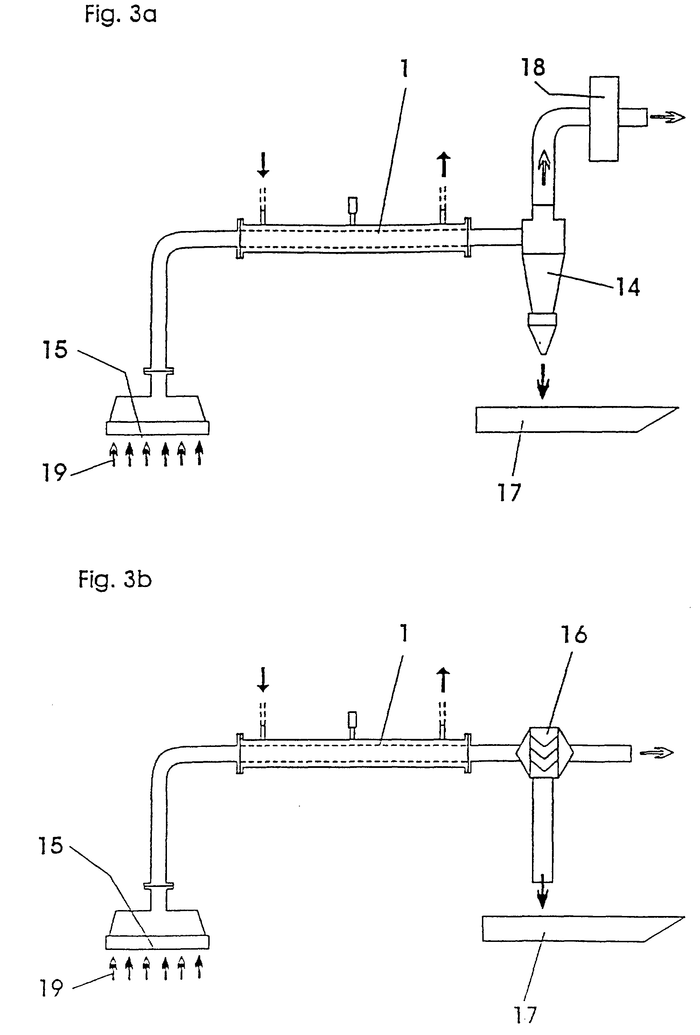

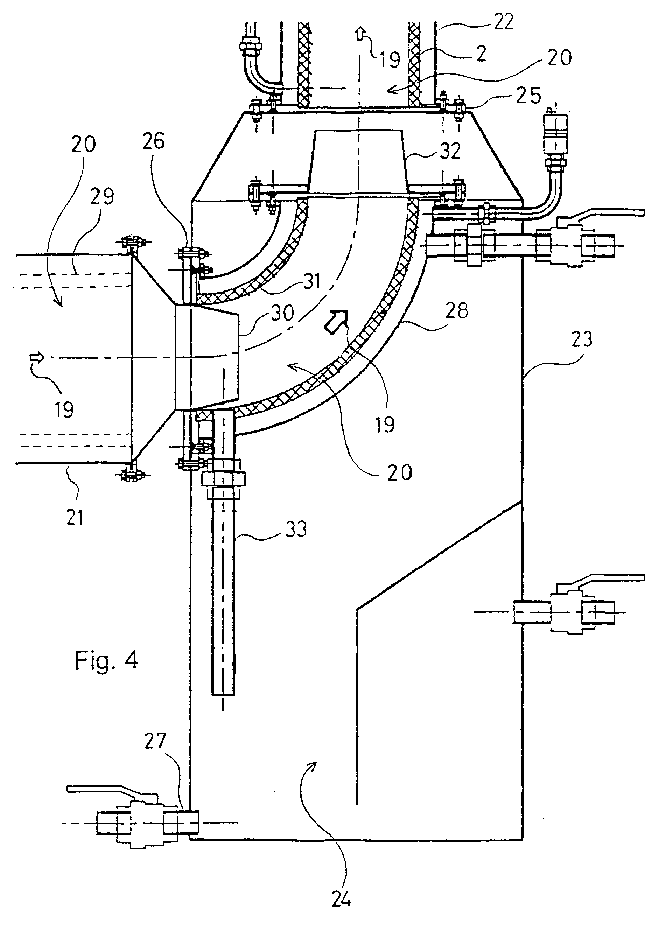

In den Figuren 1a, 1b, 2, 3a und 3b sind gerade Rohrstücke 1 dargestellt. Die erfindungsgemässen Rohrstücke 1 können jedoch auch eine abgewinkelte Form oder, wie beispielsweise in Fig. 4 beim Rohrstück 28, eine bogenförmig gekrümmte Form aufweisen.

Für den Einlass einer Flüssigkeit 9 in einen Rohrzwischenraum 8 zwischen dem Innenrohr 2 und dem Aussenrohr 3 eines Rohrstückes 1 dient ein rohrförmiger Einlassstutzen 10, welcher an der Aussenseite des Aussenrohres 3 radial absteht und an seinem inneren Ende in den Rohrzwischenraum 8 einmündet. Der Einlassstutzen 10 ist vorzugsweise in einem der Endbereiche des Aussenrohres 3 angeordnet. Um den Rohrzwischenraum 8 entlüften zu können, ist im anderen Endbereich des Aussenrohres 3 ein rohrförmiger Auslassstutzen 11 angeordnet. Dieser Auslassstutzen 11 steht ebenfalls an der Aussenseite des Aussenrohres 3 radial ab, und er mündet an seinem inneren Ende in den Rohrzwischenraum 8 ein. Beim dargestellten Ausführungsbeispiel wird auf die im Rohrzwischenraum 8 befindlich Flüssigkeit 9, welche auch als Flüssigkeitsbett bezeichnet werden kann, ein Druck ausgeübt, indem durch den Einlassstutzen 10 hindurch Flüssigkeit 9 nachgepumpt wird. Die dafür benötigte Pumpe ist in den Zeichnungen nicht dargestellt. Der Auslassstutzen 11 hat bei diesem Vorgang natürlich geschlossen zu bleiben. Der Druck des Flüssigkeitsbettes wird mit einem Manometer 12 gemessen. Das Manometer 12 ist über einen rohrförmigen Anschlussstutzen 13 am Aussenrohr 3 befestigt. Dieser Anschlussstutzen 13 steht radial von der Aussenseite des Aussenrohres 3 ab. Sein inneres Ende mündet in den Rohrzwischenraum 8 ein.

Es besteht die Möglichkeit, den Druck des Flüssigkeitsbettes automatisch zu regeln. In diesem Fall wird vorzugsweise ein elektrisches Manometer verwendet. Die Ausgangssignale des elektrischen Manometers werden einem Regler zugeführt und von diesem ausgewertet. Der Regler vergleicht den gemessenen Druck mit einem vorgegebenen Sollwert und korrigiert bei Abweichungen vom Sollwert den Druck der dem Rohrzwischenraum 8 zugeführten Flüssigkeit 9 nach oben bzw. nach unten. Die Einstellung des Druckes kann direkt über die Pumpenleistung oder indirekt mit Hilfe von Drucksteuerventilen erfolgen.

Es ist auch möglich, die Menge der das Innenrohr 2 durchdringenden Flüssigkeit durch Anlegen eines Unterdruckes auf der Seite des Abgases druckkontrolliert einzustellen.

Während des Betriebes des Rohrleitungssystems wird dem Rohrzwischenraum 8 auf fortwährend kontrollierte und strömungsarme Weise Flüssigkeit 9 zugeführt, welche durch das dreidimensionale Porensystem des als Diaphragma wirkenden Innenrohres 2 hindurch diffundiert und abgasseitig an der Wandung des Innenrohres 2 in Tropfenform austritt. Durch die Strömungsgeschwindigkeit des Abgases 19 werden die Flüssigkeitstropfen verteilt und in einen gleichmässigen, die gesamte dem Abgas ausgesetzte Innenfläche des Innenrohres 2 benetzenden Feuchtigkeitsfilm überführt, was Aerosol-Ablagerungen zuverlässig verhindert, indem die Aerosol-Partikeln in den Tröpfchen der Flüssigkeit 9 adsorbiert werden.

Es besteht dabei die Möglichkeit, die Flüssigkeit 9 mit Zusätzen zu impfen, beispielsweise mit einem als Emulgator wirkenden Vernetzungsmittel oder mit biologisch abbaubaren Substanzen. Ein Vernetzungsmittel bewirkt, dass die Aerosole in der Flüssigkeit 9 emulgiert und folglich durch diese besser adsorbiert werden. Es ist zudem möglich, die Flüssigkeit 9 auf einer das Emulgieren begünstigenden Temperatur zu halten oder zwecks schnelleren Desorption zu kühlen.

Das Abgas 19 wird bei einer Ansaugöffnung 15 einer Entlüftungsanlage angesaugt und zum Rohrleitungssystem geleitet. Im Rohrleitungssystem laufen dann die beschriebenen Prozesse ab. Dem Rohrleitungssystem können Zyklonabscheider 14 und/oder Tropfenabscheider 16 nachgeschaltet sein, mit deren Hilfe die Flüssigkeit 9 zusammen mit den luftfremden Stoffen aus dem Abgas 19 abgeführt werden können. Die mit den luftfremden Stoffen beladene Flüssigkeit 9 kann soweit erforderlich beispielsweise in einen Becken 17 ausgeschleust werden.

Das gereinigte Abgas 19 enthält eventuell noch organische Kohlenwasserstoffe und wird biologisch arbeitenden Filteranlagen 18 zugeführt, welche diese organischen Kohlenwasserstoffe aus dem Abgas 19 abscheiden. Dies war bei herkömmlichen Lüftungsanlagen nicht möglich, da dort das Abgas die erwähnten luftfremden Stoffe enthielten.

Im vorstehenden wurden Ausbildungen beschrieben, bei denen das Rohrstück 1 im Rohrleitungssystem annähernd horizontal verläuft. Das Rohrleitungssystem kann aber auch, wie beispielsweise aus Fig. 4 erkennbar, mit aufwärtsführenden Rohrstücken eingesetzt werden (in Fig. 4 ist ein solches aufwärtsführendes Rohrstück 22 nur teilweise sowie schematisch im Längsschnitt dargestellt). Auch bei einer solchen Ausbildung wird das Abgas 19 mit vorgegebener Strömungsgeschwindigkeit im Innenraum 20 des Innenrohres 2 des aufwärtsführenden Rohrstückes 22 geführt, es tritt die durch das Innenrohr 2 diffundierende Flüssigkeit 9 abgasseitig an der Wandung des Innenrohres 2 in Tropfenform aus, und die Flüssigkeitstropfen werden durch die Strömungsgeschwindigkeit des Abgases 19 verteilt und in einen gleichmässigen, die gesamte abgasseitige Wandung des Innenrohres 2 benetzende Feuchtigkeitsfilm überführt.

Reduziert sich diese Strömungsgeschwindigkeit des Abgases 19, so verzögert sich die Verteilung der Flüssigkeitstropfen. Wird dabei eine Grenzgeschwindigkeit unterschritten, bei welcher die Trägheit der Einzeltropfen grösser wird als die Dynamik der Abgasströmung, dann perlen die Flüssigkeitstropfen abgasseitig an der Wandung des Innenrohres 2 des aufwärtsführenden Rohrstückes 22 nach unten hin ab.

Bei einem annähernd horizontalen Rohrstück 21 würde eine so gebildete Flüssigkeitsansammlung an beliebiger Stelle ausgeschleust werden können (in Fig. 4 ist dieses Rohrstück 21 nur teilweise sowie nur in schematischer Seitenansicht dargestellt). Bei einem aufwärtsführenden Rohrstück 22 können jedoch, bei Unterschreitung der Grenzgeschwindigkeit, Tropfen kurzzeitig nach unten hin abfliessen, und zwar auch wenn dank einer Überwachung der Abgasgeschwindigkeit die Flüssigkeitszufuhr beim Einlassstutzen 10 sofort abgestellt wird. Demnach könnte der Absaugbereich einer Produktionsanlage gegebenenfalls auf unerwünschte Weise befeuchtet werden. Um dies zu verhindern umfasst das Rohrleitungssystem eine Tropfenausschleusvorrichtung 23, die dem aufwärtsführenden Rohrstück 22 in Strömungsrichtung des Abgases 19 vorgeschaltet ist.

Diese Tropfenausschleusvorrichtung 23 weist einen Tropfensammelraum 24 auf, der mit einem Ausgangsanschluss 25 für das aufwärtsführend angeordnete Rohrstück 22, einem Eingangsanschluss 26 für ein der Tropfenausschleusvorrichtung 23 vorgeschaltetes Rohrstück 21 sowie einem Ablassstutzen 27 für die Flüssigkeit 9 versehen ist. Der Ausgangsanschluss 25 ist in einem oberen Bereich des Tropfensammelraumes 24 angeordnet. Der Eingangsanschluss 26 ist in einem mittleren Bereich des Tropfensammelraumes 24 angeordnet. Der Ablassstutzen 27 ist in einem unteren Bereich des Tropfensammelraumes 24 angeordnet.

Innerhalb des Tropfensammelraumes 24 ist ein bogenförmig gekrümmtes Rohrstück 28 angeordnet, welches das Abgas 19 im wesentlichen vom Eingangsanschluss 26 bis in Nähe des Ausgangsanschlusses 25 führt. Das Innenrohr 29 des im wesentlichen horizontalen Rohrstückes 21 ist mit einem konischen Endstutzen 30 versehen, der im Bereich des Eingangsanschlusses 26 in den Tropfensammelraum 24 und in das Innenrohr 31 des bogenförmig gekrümmten Rohrstückes 28 koaxial hinein ragt. Das Innenrohr 31 des bogenförmig gekrümmten Rohrstückes 28 ist seinerseits mit einem konischen Endstutzen 32 versehen, der im Bereich des Ausgangsanschlusses 25 koaxial zum Innenrohr 2 des aufwärtsführend angeordneten Rohrstückes 22 weist.

Die konischen Endstutzen 30 bzw. 32 wirken einerseits als Düsen, die den Strom des Abgases 19 zu dem jeweils nachgeschalteten Rohrstück 28 bzw. 22 führen. Andererseits erscheint an diesen konischen Endstutzen 30 bzw. 32 eine Unstetigkeit der Wandung mit einer Umstülpung nach rückwärts aussen an einer ziemlich scharfen Kante, welche die Tropfen daran hindert, entlang der Wandung in Strömungsrichtung des Abgases 19 weiterzufliessen. Die am Innenrohr 29 des im wesentlichen horizontalen Rohrstückes 21 fliessenden Tropfen können vom Strom des Abgases 19 nur bis zum Endstutzen 30 getrieben werden, sie fallen dort ab und gelangen über das Ablassrohr 33 in den unteren Bereich des Tropfensammelraumes 24. Ebenfalls können die am Innenrohr 31 des bogenförmig gekrümmten Rohrstückes 28 fliessenden Tropfen vom Strom des Abgases 19 nur bis zum Endstutzen 32 getrieben werden, sie fallen dort ab und gelangen ebenfalls in den unteren Bereich des Tropfensammelraumes 24. Schliesslich hindert der Endstutzen 32 auch die am Innenrohr 2 des aufwärtsführend angeordneten Rohrstückes 22 zurückfliessenden Tropfen daran, in das Innenrohr 31 des bogenförmig gekrümmten Rohrstückes 28 zu gelangen. Diese Tropfen gelangen ebenfalls in den unteren Bereich des Tropfensammelraumes 24. Die dort gesammelte Flüssigkeit kann schliesslich über den Ablassstutzen 27 entfernt werden.

Die beschriebene Tropfenausschleusvorrichtung 23 gewährleistet, dass sowohl die Tropfen aus dem aufwärtsführenden Rohrstück 22 wie auch aus dem bogenförmig gekrümmten Rohrstück 28 und aus dem im wesentlichen horizontalen Rohrstück 21 vollständig abgeleitet und in dem als Syphon und Ausschleustopf ausgebildeten Tropfensammelraum 24 aufgefangen werden. Der Tropfensammelraum ist dabei so konstruiert, dass auch bei im Unterdruck laufender Absaugung des Abgases 19 eine bei Unterschreitung einer vorgegebenen Grenzgeschwindigkeit gegebenenfalls rücklaufende Flüssigkeit abgeführt werden kann.

Das beschriebene abgasführende Rohrleitungssystem mit regulierbarer Benetzung der Rohrwand ermöglicht im Gegensatz zu den bekannten Sprühsystemen eine flüssigkeitsarme Reinigung der Rohrinnenwände von Lüftungsanlagen im kontinuierlichen oder diskontinuierlichen Betrieb. Es verhindert flächendeckende Ablagerungen an den Rohrinnenwänden und reduziert dadurch die Gefahr von Ausfällen und von Bränden der Produktionsanlage.

### Liste der Bezugszeichen

- 1: Rohrstück
- 2: Innenrohr eines Rohrstückes
- 3: Aussenrohr eines Rohrstückes
- 4: Abschlussplatte eines Rohrstückes
- 5: Bohrung in einer Abschlussplatte
- 6: Schraube zur Verbindung zweier Rohrstücke
- 7: Zentrales Loch einer Abschlussplatte
- 8: Rohrzwischenraum
- 9: Flüssigkeit
- 10: Einlassstutzen eines Rohrstückes
- 11: Auslassstutzen eines Rohrstückes
- 12: Manometer eines Rohrstückes
- 13: Anschlussstutzen
- 14: Zyklonabscheider
- 15: Ansaugöffnung für das Abgas
- 16: Tropfenabscheider
- 17: Sedimentationsbecken
- 18: Filteranlage
- 19: Abgas bzw. Abluft
- 20: Innenraum eines Rohrstückes
- 21: horizontales Rohrstück
- 22: aufwärtsführendes Rohrstück
- 23: Tropfenausschleusvorrichtung
- 24: Tropfensammelraum
- 25: Ausgangsanschluss
- 26: Eingangsanschluss
- 27: Ablassstutzen
- 28: Bogenförmig gekrümmtes Rohrstück
- 29: Innenrohr des horizontalen Rohrstückes
- 30: Endstutzen des Innenrohres des horizontalen Rohrstückes
- 31: Innenrohr des gekrümmten Rohrstückes
- 32: Endstutzen des Innenrohres des gekrümmten Rohrstückes
- 33: Ablassrohr

## Patentansprüche

1. Von Abgas durchströmtes Rohrstück (1) eines abgasführenden Rohrleitungssystems, wobei eine Innenwand des Rohrstückes (1) zwecks ihrer Reinigung mit einer Flüssigkeit benetzbar ist, das Rohrstück (1) ein Aussenrohr (3) aus flüssigkeitsundurchlässigem Material und ein im Aussenrohr (3) angeordnetes Innenrohr (2) aus kontrolliert flüssigkeitsdurchlässigem Material umfasst, und ein zwischen dem Aussenrohr (3) und dem Innenrohr (2) vorgesehener Rohrzwischenraum (8) mit der Flüssigkeit (9) gefüllt ist.

2. Rohrstück nach Anspruch 1, **dadurch gekennzeichnet, dass** das Innenrohr (2) aus einem porösen Material besteht und in Abhängigkeit von einem Druckunterschied zwischen dem Rohrzwischenraum (8) und dem Innenraum (20) für die Flüssigkeit (9) durchlässig ist, wobei sich das Innenrohr (2) bei Druckgleichheit für die Flüssigkeit (9) als undurchlässig verhält.

3. Rohrstück nach Anspruch 2, **dadurch gekennzeichnet, dass** das poröse Material ein gesintertes Material ist.

4. Rohrstück nach Anspruch 3, **dadurch gekennzeichnet, dass** das poröse Material ein gesinterter Kunststoff, ein gesintertes Metall oder eine gesinterte Keramik ist.

5. Abgasführendes Rohrleitungssystem mit mindestens einem von Abgas durchströmten Rohrstück nach einem der Ansprüche 1 bis 3.

6. Rohrleitungssystem nach Anspruch 5, **dadurch gekennzeichnet, dass** in Strömungsrichtung des Abgases (19) das Rohrleitungssystem ein Rohrstück (22) umfasst, das aufwärtsführend angeordnet ist und dem eine Tropfenausschleusvorrichtung (23) vorgeschaltet ist.

7. Rohrleitungssystem nach Anspruch 6, **dadurch gekennzeichnet, dass** die Tropfenausschleusvorrichtung (23) einen Tropfensammelraum (24) aufweist, der mit einem Ausgangsanschluss (25) für das aufwärtsführend angeordnete Rohrstück (22), einem Eingangsanschluss (26) für ein der Tropfenausschleusvorrichtung (23) vorgeschaltetes Rohrstück (21) sowie einem Ablassstutzen (27) für die Flüssigkeit (9) versehen ist, wobei der Ausgangsanschluss (25) in einem oberen, der Eingangsanschluss (26) in einem mittleren und der Ablassstutzen (27) in einem unteren Bereich des Tropfensammelraumes (24) angeordnet ist.

8. Rohrleitungssystem nach Anspruch 7 mit einem der Tropfenausschleusvorrichtung (23) vorgeschalteten im wesentlichen horizontalen Rohrstück (21), **dadurch gekennzeichnet, dass** innerhalb des Tropfensammelraumes (24) ein bogenförmig gekrümmtes Rohrstück (28) angeordnet ist, welches das Abgas (19) im wesentlichen vom Eingangsanschluss (26) bis in Nähe des Ausgangsanschlusses (25) führt.

9. Rohrleitungssystem nach Anspruch 8, **dadurch gekennzeichnet, dass** das Innenrohr (29) des im wesentlichen horizontalen Rohrstückes (21) mit einem konischen Endstutzen (30) versehen ist, der im Bereich des Eingangsanschlusses (26) in den Tropfensammelraum (24) und in das Innenrohr (31) des bogenförmig gekrümmten Rohrstückes (28) koaxial hinein ragt, und das Innenrohr (31) des bogenförmig gekrümmten Rohrstückes (28) mit einem konischen Endstutzen (32) versehen ist, der im Bereich des Ausgangsanschlusses (25) koaxial zum Innenrohr (2) des aufwärtsführend angeordneten Rohrstückes (22) weist.

## Claims

1. Piece of piping (1), which waste gas is flowing through, of a waste gas-conducting pipeline system, whereby an inner wall of the piece of piping (1) can be wetted with a liquid for cleaning purposes, the piece of piping (1) comprises an outer pipe (3) made of material that is impermeable to liquid and an inner pipe (2) arranged inside the outer pipe (3) and made of a material that is permeable to liquid in controlled manner, and an inter-pipe space (8) provided between the outer pipe (3) and inner pipe (2) is filled with the liquid (9).

2. Piece of piping according to claim 1, **characterized in that** the inner pipe (2) is made of a porous material and is permeable to the liquid (9) as a function of a pressure difference between the inter-pipe space (8) and the interior space (20), whereby the inner pipe (2) behaves so as to be impermeable to the liquid (9) in the case of equality of pressure.

3. Piece of piping according to claim 2, **characterized in that** the porous material is a sintered material.

4. Piece of piping according to claim 3, **characterized in that** the porous material is a sintered synthetic material, a sintered metal or a sintered ceramic.

5. Waste gas-conducting pipeline system comprising at least one waste gas-conducting piece of piping, which waste gas is flowing through, according to one of claims 1 to 3.

6. Pipeline system according to claim 5, **characterized in that** in the flow direction of the waste gas (19) the pipeline system comprises a piece of piping (22) arranged to lead upwards and having a droplet discharge arrangement (23) connected upstream thereof.

7. Pipeline system according to claim 6, **characterized in that** the droplet discharge arrangement (23) has a droplet-collecting space (24) that is provided with an outlet connection (25) for the upwards-leading piece of piping (22), an inlet connection (26) for a piece of piping (21) connected upstream of the droplet discharge arrangement (23), and a discharge connection piece (27) for the liquid (9), whereby the outlet connection (25) is arranged in an upper region, the inlet connection (26) in an intermediate region and the discharge connection piece (27) in a lower region of the droplet-collecting space (24).

8. Pipeline system according to claim 7 comprising a substantially horizontal piece of piping (21) connected upstream of the droplet discharge arrangement (23), **characterized in that** an arcuately curved piece of piping (28) is arranged within the droplet-collecting space (24) and leads the waste gas (19) substantially from the inlet connection (26) to the vicinity of the outlet connection (25).

9. Pipeline system according to claim 8, **characterized in that** the inner pipe (29) of the substantially horizontal piece of piping (21) is provided with a conical terminal nozzle (30) which projects coaxially, in the region of the inlet connection (26), into the droplet-collecting space (24) and the inner pipe (31) of the arcuately curved piece of piping (28), and the inner pipe (31) of the arcuately curved piece of piping (28) is provided with a conical terminal nozzle (32) which, in the region of the outlet connection (25), is directed coaxially toward the inner pipe (2) of the upwards-leading piece of piping (22).

## Revendications

1. Pièce de tube (1), parcourue par un gaz usé effluent, d'un système de conduites tubulaires véhiculant du gaz usé effluent, une paroi intérieure de la pièce de tube (1) pouvant être mouillée de liquide aux fins de nettoyage, la pièce de tube (1) comportant un tube extérieur (3) fait de matériau imperméable aux liquides et, disposé au sein du tube extérieur (3), un tube intérieur (2) fait de matériau perméable aux liquides de façon contrôlée, et un espace (8) prévu entre le tube extérieur (3) et le tube intérieur (2) étant rempli du liquide (9).

2. Pièce de tube selon la revendication 1, **caractérisée en ce que** le tube intérieur (2) est fait de matériau poreux et est perméable au liquide (9) en fonction d'une différence de pression entre l'espace (8) situé entre les tubes et l'espace intérieur (20), le tube intérieur (2) se comportant de manière imperméable au liquide (9) dans le cas d'une égalité de pression.

3. Pièce de tube selon la revendication 2, **caractérisée en ce que** le matériau poreux est un matériau fritté.

4. Pièce de tube selon la revendication 3, **caractérisée en ce que** le matériau poreux est un matériau synthétique fritté, un métal fritté ou une céramique frittée.

5. Système de conduites tubulaires véhiculant du gaz usé effluent, comportant au moins une pièce de tube parcourue par un gaz usé effluent selon l'une des revendications 1 à 3.

6. Système de conduites tubulaires selon la revendication 5, **caractérisé en ce que** dans la direction d'écoulement du gaz usé effluent (19) le système de conduites tubulaires comporte une pièce de tube (22) disposée de manière à conduire vers le haut et en amont de laquelle est connecté un dispositif de décharge de gouttelettes (23).

7. Système de conduites tubulaires selon la revendication 6, **caractérisé en ce que** le dispositif de décharge de gouttelettes (23) présente un espace de recueil de gouttelettes (24) muni d'une connexion de sortie (25) destinée à la pièce de tube conduisant vers le haut (22), d'une connexion d'entrée (26) destinée à une pièce de tube (21) connectée en amont du dispositif de décharge de gouttelettes (23), et d'une pièce de connexion de décharge (27) pour le liquide (9), la connexion de sortie (25) étant disposée en une région supérieure, la connexion d'entrée (26) en une région intermédiaire et la connexion de décharge (27) en une région inférieure de l'espace de recueil de gouttelettes (24).

8. Système de conduites tubulaires selon la revendication 7 comportant une pièce de tube (21) pour l'essentiel horizontale connectée en amont du dispositif de décharge de gouttelettes (23), **caractérisé en ce qu'**une pièce de tube courbée en arc (28) est disposée au sein de l'espace de recueil de gouttelettes (24) et conduit le gaz usé effluent (19) pour l'essentiel de la connexion d'entrée (26) jusqu'au voisinage de la connexion de sortie (25).

9. Système de conduites tubulaires selon la revendication 8, **caractérisé en ce que** le tube intérieur (29) de la pièce de tube pour l'essentiel horizontale (21) est pourvue d'un ajutage terminal conique (30) qui dans la région de la connexion d'entrée (26) pénètre coaxialement dans l'espace de recueil de gouttelettes (24) et le tube intérieur (31) de la pièce de tube courbée en arc (28), et le tube intérieur (31) de la pièce de tube courbée en arc (28) est pourvu d'un ajutage terminal conique (32) qui dans la région de la connexion de sortie (25) est dirigé coaxialement vers le tube intérieur (2) de la pièce de tube conduisant vers le haut (22).
